# EUROPEAN PATENT APPLICATION

(11) **EP 4 748 787 A1**
(43) Date of publication of application: **27.05.2026**
(21) Application number: 25217511.2
(22) Date of filing: 20.11.2025
(51) Int. Cl.: C01B 13/11

(54) **OZONE GENERATOR**

(30) Priority: 20.11.2024 IN 202441089776
(71) Applicant: FARADAY OZONE PRODUCTS PRIVATE LIMITED, 641035 Coimbatore Tamil Nadu (IN)
(72) Inventor: KOODALINGAM, Vivekanandan, 641035 Coimbatore (IN)
(74) Representative: ip21 Ltd

(57) **Abstract**

An ozone generator (100) includes an ozone production unit (102) with multiple electrodes (104AN) that ionizes air or oxygen to produce ozone. The ozone generator comprises an electronic unit (106) adjacent to the ozone production unit for control and operation. An integrated cooling unit (108) cools the ozone production unit (102), and the cooling of the ozone production unit (102) by the integrated cooling unit (108) indirectly cools the electronic unit (106) through a thermally conductive interface between the ozone production unit (102) and the electronic unit (106). A door control switch on the housing door restricts opening if the internal and external temperature difference exceeds 3°C, thus preventing moisture from affecting the electrodes. This design enhances cooling efficiency, eliminates the need for separate cooling channels, and maintains a high ozone concentration with improved ozone production.

## Description

### PREAMBLE TO THE DESCRIPTION

The following specification particularly describes the invention and the manner in which it is to be performed.

### BACKGROUND

### Technical Field

Embodiments of this disclosure generally relate to an ozone generator, and more particularly, to an ozone generator that enhances cooling efficiency and prevents water condensation, thereby improving the overall performance, reliability, and lifespan of the ozone generator.

### Description of the Related Art

Ozone generators are widely used in various applications, including air purification, water treatment, and industrial processes, due to their ability to produce ozone, a powerful oxidizing agent. These devices typically consist of an ozone generation unit and an electronic unit responsible for controlling and operating the system. Traditional ozone generators, however, face several technical challenges and drawbacks.

The ozone generators operate on the principle of corona discharge technology, which involves two electrodes supplied with high voltage. During operation, corona discharge occurs between the electrodes. However, heat energy is dissipated during this process, which reduces the overall efficiency of the ozone generator. To address this issue, water cooling is introduced into the system. Typically, water chillers are used to cool the generator within a temperature range of 10 to 25°C. The chiller is connected to the ozone generator via a recirculating loop.

One critical issue is the condensation of water vapor within the ozone generator. As the temperature fluctuates, especially during the cooling process, condensed water can form and enter the electronic unit. This water ingress can lead to short circuits, corrosion, and other forms of damage, significantly impacting the reliability and safety of the ozone generator.

Accordingly, there remains a need for a system to overcome these technical problems and also enhances cooling efficiency and prevents water condensation, thereby improving the overall performance, reliability, and lifespan of the ozone generator.

### SUMMARY

In view of the foregoing, an embodiment herein provides an ozone generator comprising an ozone production unit with a plurality of electrodes that discharges ions to ionize air or oxygen to generate ozone, and an electronic unit for controlling the ozone production unit. The electronic unit is arranged adjacent to the ozone production unit. The ozone generator includes an integrated cooling unit that is thermally coupled to the ozone production unit. The integrated cooling unit is configured to provide targeted cooling to the ozone production unit while minimizing cooling-water consumption. The ozone generator includes an electronic door control switch that is placed on a door of a housing that houses the ozone production unit and the electronic unit. The electronic door control switch is configured to prevent opening of the door of the housing when a dew point temperature difference between inside and outside of the ozone production unit exceeds a predefined threshold.

When in operation, the ozone is configured to enable (i) the integrated cooling unit to cool the ozone production unit, wherein the cooling of the ozone production unit by the integrated cooling unit indirectly cools the electronic unit through a thermally conductive interface between the ozone production unit and the electronic unit, thereby eliminating a requirement for cooling channels for the electronic unit, wherein the ozone production unit and the electronic unit are arranged in a configuration such that any condensation water formed during cooling operation drains downward away from the electronic unit, thereby preventing moisture ingress into/contacting from a plurality of electrical components of the electronic unit and reducing overall chiller energy consumption; and (ii) the electronic door control switch prevents the door of the housing from opening when the dew point temperature difference between the temperature inside the ozone production unit and the temperature outside the ozone production unit exceeds a predefined threshold of 3 degree Celsius, thereby preventing the moisture entering into the plurality of electrodes, which enables the ozone production unit to generate the ozone at a controlled and improved concentration.

In some embodiments, the ozone generator comprises an automatic moisture prevention system configured to detect the dew point temperature difference between the temperature inside the ozone production unit and the temperature outside the ozone production unit to at least one of (i) deactivate the integrated cooling unit or (ii) enable the electronic door control switch to allow the opening of the door of the housing when the dew point temperature difference is within a predefined threshold of 3 degree Celsius, thereby preventing moisture/water ingress into the plurality of electrical components of the electronic unit.

The ozone generator may operate using an Intelligent waveform sampling system to (i) optimize power consumption by adjusting the waveform to reduce the power supplied to the ozone generator ranging from 100% to 5%, thereby enabling the ozone generator to produce varying concentration (e.g. in grams per hour) of ozone ranging from 2% to 100% as required, thereby enabling for control and adjustment of ozone production.

In some embodiments, the ozone generator generates the ozone with a concentration of about 25 wt%. The ozone generator may produce ozone up to 150 grams per hour per block. In some embodiments, the ozone generator has an operating ozone concentration of about 12% and operates up to 850 watts. The ozone generator consumes less than 7 kilowatt per kilogram (Kw/kg) of ozone.

In some embodiments, the ozone generator has a cooling water temperature about 5 to 25 degrees Celsius when the ozone generator operates up to 850 watts and has an ozone pressure of up to 2.6 bars and a flow rate of up to 20 standard litres per minute (slpm). In some embodiments, the ozone generator operates at an ozone pressure of up to 3.7 bars and operates up to 1000 watts.

In some embodiments, the plurality of electrodes comprises a plurality of first electrodes that is connected to positive polarity of the power supply, and a plurality of second electrodes that is connected to negative polarity of the power supply. The plurality of first electrodes and the plurality of second electrodes are arranged alternatively.

In some embodiments, the ozone production unit comprises a dielectric material that encloses (a) the plurality of first electrodes, and (b) the plurality of second electrodes. The dielectric material prevents (a) the plurality of first electrodes, and (b) the plurality of second electrodes from corrosion when the air or oxygen is passed in between (a) the plurality of first electrodes, and (b) the plurality of second electrodes to generate ozone. The dielectric material is a glass or ceramic. When a power supply provides a pre-determined power to (a) the plurality of first electrodes and (b) the plurality of second electrodes, the plurality of first electrodes and the plurality of second electrodes discharges ions to ionize the air or oxygen that is passed in between (a) the plurality of first electrodes and (b) the plurality of second electrodes to generate the ozone.

In some embodiments, the ozone production unit comprises a manifold comprising (i) a plurality of first inlets to supply the air or oxygen into the ozone production unit, (ii) a plurality of second inlets to supply water into the integrated cooling unit for cooling the ozone production unit and the electronic unit, (iii) a plurality of first outlets to collect the ozone generated from the ozone production unit and (iv) a plurality of second outlets to collect the hot water from the integrated cooling unit after cooling the ozone production unit and the electronic unit.

In some embodiments, the ozone generator that operates at 600 watts generates about 100 grams of ozone per hour and consumes 6 watts per gram of ozone. In some embodiments, the ozone generator operates at a pressure ranging from 0.5 to 4 bar and a frequency that ranges from 40.3 to 50 Kilo Hertz (Khz).

In some embodiments, the ozone generator that operates at 425 watts generates about 67.8 grams of ozone for 9 standard litres per minute (slpm) and consumes 6.3 watts per gram of ozone. The ozone generator that operates at 510 watts generates about 81.1 grams of ozone for 9 standard litres per minute (slpm) and consumes 6.3 watts per gram of ozone. The ozone generator that operates at 595 watts generates about 91.3 grams of ozone for 9 standard litres per minute (slpm) and consumes 6.5 watts per gram of ozone. The ozone generator that operates at 680 watts generates about 101.5 grams of ozone for 9 standard litres per minute (slpm) and consumes 6.7 watts per gram of ozone. The ozone generator that operates at 765 watts generates about 109 grams of ozone for 9 standard litres per minute (slpm) and consumes 7 watts per gram of ozone. The ozone generator that operates at 850 watts generates about 116.5 grams of ozone for 9 standard litres per minute (slpm) and consumes 7.3 watts per gram of ozone. The housing is an air tight chamber to completely isolate external air from entering into the ozone generator.

The ozone generator aims to overcome the aforementioned technical problems by integrating a cooling unit that cools the ozone production unit and indirectly cools the electronic unit. This integrated approach not only simplifies the design but also enhances cooling efficiency and prevents water condensation, thereby improving the overall performance, reliability, and lifespan of the ozone generator. The integrated cooling unit simultaneously cools both the ozone production unit and the electronic unit, enhancing overall system efficiency. By placing the cooling unit between the ozone production unit and the electronic unit, energy loss is minimized, ensuring optimal performance. The ozone generator prevents the ingress of condensed water into the electronic unit, protecting sensitive electronic components and extending their lifespan. The integrated cooling unit eliminates the need for additional cooling channels, simplifying the design and potentially reducing manufacturing costs. By preventing water condensation and cooling both critical components, the system's reliability and durability are improved, making it more robust for various applications. The vertical arrangement of the integrated cooling unit allows for a more compact design, saving space and making the system more suitable for diverse installations.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF THE DRAWINGS

The embodiments herein will be better understood from the following detailed description with reference to the drawings, in which:
FIG. 1 illustrates a system view of an ozone generator that generates ozone by preventing water condensation according to an embodiment herein;
FIG. 2 illustrates a system view of one or more electrodes of the ozone generator of FIG. 1 according to an embodiment herein;
FIGS. 3A & 3B illustrate exploded system views of an ozone generator that generates ozone by preventing water condensation according to an embodiment herein;
FIGS. 4A & 4B illustrate exemplary views of the ozone generator of FIG. 1 according to an embodiment herein;
FIG. 5 illustrates an exemplary view of a transformer of the ozone generator of FIG. 1 according to an embodiment herein;
FIG. 6A is a graphical representation that illustrates an ozone production performance curve showing the relationship between oxygen flow rate and ozone output at 10°C of the ozone generator of FIG. 1 according to an embodiment herein;
FIG. 6B is a graphical representation that illustrates an ozone production performance curve illustrating the relationship between oxygen flow rate (Standard Liters Per Minute, SLPM) and ozone production rate (G/hr) of the ozone generator of FIG. 1 at varying cooling water temperatures (10°C, 15°C, 20°C, and 25°C) under a constant power input of 850 watts according to an embodiment herein;
FIG. 6C is a graphical representation that illustrates an ozone production performance curve illustrating the relationship between oxygen flow rate (SLPM) and ozone production rate (G/hr) of the ozone generator of FIG. 1 operating at different gas pressures according to an embodiment herein;
FIG. 6D is a graphical representation that illustrates an ozone production performance curve illustrating oxygen flow rate (SLPM) and consumption at different gas pressures of 2.2 bar, 2.4 bar, and 2.6 bar of the ozone generator of FIG. 1 according to an embodiment herein;
FIGS. 7A & 7B are graphical representations that illustrate a comparison of the ozone production performance of the ozone generator with an existing ozone system according to an embodiment herein; and
FIG. 8 illustrates a method of generating ozone by preventing water condensation on an ozone generator according to an embodiment herein.

### DETAILED DESCRIPTION OF PREFERRED EMBODIMENTS

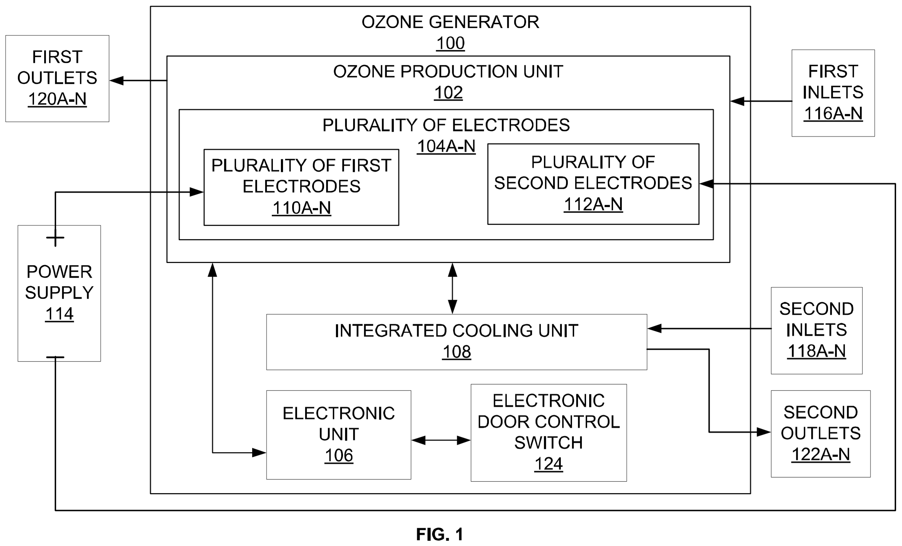

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein. As mentioned, there remains a need for an ozone generator for generating ozone by preventing water condensation. Referring now to the drawings, and more particularly to FIGS. 1 through 8, where similar reference characters denote corresponding features consistently throughout the figures, there are shown preferred embodiments.

FIG. 1 illustrates a system view of an ozone generator 100 that generates ozone by preventing water condensation according to an embodiment herein. The ozone generator 100 includes an ozone production unit 102 with one or more electrodes 104A-N for ionizing air or oxygen to produce ozone, and an electronic unit 106 for controlling and operating the ozone production unit 102. The electronic unit 106 is placed adjacent to the ozone production unit 102. The ozone generator 100 includes an integrated cooling unit 108 thermally coupled to the ozone production unit 102. The integrated cooling unit 108 is configured to provide targeted cooling to the ozone production unit 108 while minimizing cooling-water consumption. The ozone generator 100 includes an electronic door control switch that is placed on a door of a housing that houses the ozone production unit 102 and the electronic unit 106. When in operation the ozone generator is configured to enable (i) the integrated cooling unit 108 to cool the ozone production unit 102, wherein the cooling of the ozone production unit 102 by the integrated cooling unit 108 indirectly cools to the electronic unit 106 through a thermally conductive interface between the ozone production unit 102 and the electronic unit 106, thereby eliminating a requirement for cooling channels for the electronic unit 106, wherein the ozone production unit 102 and the electronic unit 106 are arranged in a configuration such that any condensation water formed during cooling operation drains downward away from the electronic unit 106, thereby preventing moisture ingress into/contacting from a plurality of electrical components of the electronic unit 106 and reducing overall chiller energy consumption, and (ii) the electronic door control switch to prevent the door of the housing from opening when a dew point temperature difference between a temperature inside the ozone production unit 102 and a temperature outside the ozone production unit 102 exceeds a predefined threshold of 3 degree Celsius, thereby preventing the moisture entering into the plurality of electrodes, (iii) the ozone production unit 102 to generate the ozone with improved concentration.

In some embodiments, the ozone generator 100 comprises an automatic moisture prevention system that detects a differential temperature between the temperature inside the ozone production unit 102 and the temperature outside the ozone production unit 102. The ozone generator 100 deactivates the integrated cooling unit 108 and/or enables the electronic door control switch to allow the door opening of the housing when the dew point temperature difference is within a predefined threshold of 3 degree Celsius, thereby preventing moisture/water ingress into the plurality of electrical components of the electronic unit 106. The housing may be an air tight chamber to completely isolate external air entering into the ozone generator 100. The ozone generator 100 may employ relative humidity and temperature sensors to continuously monitor the environmental conditions inside the ozone generator 100 enclosure. By processing the data from these sensors, the ozone generator 100 calculates the dew point temperature in relation to the ozone generator's 100 internal water temperature. This enables precise identification of conditions where condensation is likely to occur. When the temperature differential between the internal temperature and the calculated dew point is within 3°C, the ozone generator 100 automatically activates the door release mechanism. This allows air exchange and stabilizes the internal environment of the ozone generator 100, thereby preventing condensation buildup on sensitive components and ensuring reliable, moisture-free operation of the ozone generator 100.

In some embodiments, the ozone generator 100 implements an Intelligent waveform sampling to (i) optimize power consumption by adjusting the waveform to reduce the power supplied to the ozone generator 100 ranging from 100% to 5%, and (ii) control the ozone generation process, thereby enabling the ozone generator 100 to produce varying concentration of ozone ranging from 2% to 100% as required, thereby enabling for precise control and adjustment of ozone production. For example, the ozone generator 100 may consume 6 watts to produce 1 gram of ozone. The ozone generator 100 may reduce the power consumption by about 32% and the oxygen consumption by about 32%.

In some embodiments, the ozone production unit 102 including the plurality of electrodes (104A-N) and the electronic unit 106 including a plurality of electrical components are arranged in a vertical stack arrangement, such that the condensation water to flow downward, thereby preventing the water from contacting the electrical components.

In some embodiments, the ozone generator 100 generates ozone with a concentration of about 25 wt%. The ozone generator 100 may produce ozone up to 150 grams per hour per block. In some embodiments, the ozone generator 100 generates ozone of about 110 to 130 grams per hour per block. In some embodiments, the ozone generator 100 has an operating ozone concentration of about 12 % and operates up to 850 watts. The ozone generator 100 consumes less than 7 kilowatt per kilogram (Kw/kg) of ozone.

In some embodiments, the ozone generator 100 has a cooling water temperature about 5 to 25 degree Celsius when the ozone generator 100 operates up to 850 watts and has an ozone pressure of up to 2.6 bars and a flow rate of up to 20 standard litres per minute (slpm). In some embodiments, the ozone generator 100 operates at an ozone pressure of up to 3.7 bars and operates up to 1000 watts.

In some embodiments, the one or more electrodes 104A-N comprises one or more first electrodes 110A-N that is connected to positive polarity of the power supply 114, and one or more second electrodes 112A-N that is connected to negative polarity of the power supply 114. The one or more first electrodes 110A-N and the one or more second electrodes 112A-N are arranged alternatively.

In some embodiments, the ozone production unit 102 comprises a dielectric material that encloses (a) the one or more first electrodes 110A-N, and (b) the one or more second electrodes 112A-N. The dielectric material prevents (a) the one or more first electrodes 110A-N, and (b) the one or more second electrodes 112A-N from corrosion when the air or oxygen is passed in between (a) the one or more first electrodes110A-N, and (b) the plurality of second electrodes to generate ozone, The dielectric material is a glass or ceramic. When a power supply 114 provides a pre-determined power to (a) the one or more first electrodes 110A-N and (b) the one or more second electrodes 112A-N, the one or more first electrodes 110A-N and the one or more second electrodes 112A-N discharges ions to ionize the air or oxygen that is passed in between (a) the one or more first electrodes 110AN and (b) the one or more second electrodes 112A-N to generate the ozone.

In some embodiments, the ozone production unit 102 comprises a manifold comprising (i) one or more first inlets 116A-N to supply the air or oxygen into the ozone production unit 102, (ii) one or more second inlets 118A-N to supply water into the integrated cooling unit 108 for cooling the ozone production unit 102 and the electronic unit 106, (iii) one or more first outlets 120A-N to collect the ozone generated from the ozone production unit 102 and (iv) one or more second outlets 122A-N to collect the hot water from the integrated cooling unit 108 after cooling the ozone production unit 102 and the electronic unit 106.

In some embodiments, the ozone generator 100 that operates at 600 watts generates about 100 grams of ozone per hour and consumes 6 watts per gram of ozone. In some embodiments, the ozone generator 100 operates at a pressure ranging from 0.5 to 4 bar and a frequency that ranges from 40.3 to 50 Kilo Hertz (Khz).

In some embodiments, the ozone generator 100 that operates at 425 watts generates about 67.8 grams of ozone for 9 standard litres per minute (slpm) and consumes 6.3 watts per gram of ozone. The ozone generator 100 that operates at 510 watts generates about 81.1 grams of ozone for 9 standard litres per minute (slpm) and consumes 6.3 watts per gram of ozone. The ozone generator 100 that operates at 595 watts generates about 91.3 grams of ozone for 9 standard litres per minute (slpm) and consumes 6.5 watts per gram of ozone. The ozone generator 100 that operates at 680 watts generates about 101.5 grams of ozone for 9 standard litres per minute (slpm) and consumes 6.7 watts per gram of ozone. The ozone generator 100 that operates at 765 watts generates about 109 grams of ozone for 9 standard litres per minute (slpm) and consumes 7 watts per gram of ozone. The ozone generator 100 that operates at 850 watts generates about 116.5 grams of ozone for 9 standard litres per minute (slpm) and consumes 7.3 watts per gram of ozone.

In some embodiments, the ozone generator 100 includes a transformer that has been optimized for efficient operation with enhanced heat regulation, supporting up to 850 Watts, with efforts to increase capacity to 1500 Watts. The ozone generator 100 can achieve a maximum ozone concentration up to 25 wt%, consistently maintaining an operational concentration above 12%. The ozone generator 100 incorporates mechanical enhancements that simplify assembly and repair, while ensuring the ozone generator's resilience under pressures up to 12 bars.

The ozone generator 100 is engineered to maintain efficient performance across a range of pressures and temperatures, with minimal impact on ozone concentration as temperature rises. The below table 1 illustrates the generation capacity of the ozone generator 100.

**Table 1:**

| **Standard Liters Per Minute (SLPM)** | **g/m³** | **Gm/hr** | **% Con/wt** |
|---|---|---|---|
| 20 | 121.6 | 145.9 | 8.5 |
| 19 | 126.7 | 144.4 | 8.9 |
| 18 | 132.3 | 142.9 | 9.2 |
| 17 | 138.4 | 141.2 | 9.7 |
| 16 | 144.8 | 139.0 | 10.1 |
| 15 | 151.9 | 136.7 | 10.6 |
| 14 | 160.5 | 134.8 | 11.2 |
| 13 | 168.6 | 131.5 | 11.8 |
| 12 | 176.7 | 127.2 | 12.4 |
| 11 | 186.8 | 123.3 | 13.1 |
| 10 | 197.4 | 118.4 | 13.8 |
| 9 | 210.2 | 113.5 | 14.7 |
| 8 | 224.7 | 107.9 | 15.7 |
| 7 | 237.7 | 99.8 | 16.6 |
| 6 | 252 | 90.7 | 17.6 |
| 5 | 265.5 | 79.7 | 18.6 |
| 4 | 279.8 | 67.2 | 19.6 |
| 3 | 280.5 | 50.5 | 19.6 |
| 2.5 | 292.6 | 43.9 | 20.5 |
| 2 | 294.1 | 35.3 | 20.6 |
| 1 | 291.5 | 17.5 | 20.4 |

The ozone generator 100 demonstrates a 17% increase in ozone output compared to existing systems using the same oxygen input.

Table 2 illustrates a pressure leak test of the ozone generator 100. The maximum pressure is applied to assess the capabilities of the gasket in both the water and gas sections of the ozone generator 100. The ozone generator 100 is working till 3.7 bar pressure on operation with power.

**Table 2:**

| **Block Section** | **Pressure 5 bar** | **Pressure 6 bar** | **Pressure 12 bar** |
|---|---|---|---|
| Water Chamber - Top | Pass | Pass | Pass |
| Ozone Gas Chamber | Pass | Pass | Pass |
| Water Chamber - Bottom | Pass | Pass | Pass |

Table 3 illustrates a 14.4% reduction in output when the temperature increased from 10°C to 30°C, with water pressure maintained at 1.8 bar. After increasing the water flow to the blocks, the ozone generator achieved a 5% improvement compared to the previous design. No ceramic breakage is observed.

**Table 3:**

| Water Temp in deg C | 5 -10 | 15 | 20 | 25 | 30 |
|---|---|---|---|---|---|
| Stable Ozone output in gm/hr / Concentration | 109 / 12.1 | 99.10/11 | 95.89/ 10.64 | 92.17 / 10.23 | 89.02/9.88 |
| % Reduction | - | 4.81 | 4 | 3.1 | 3.2 |

**Table 4: Wide Operating Pressure Capabilities of the ozone generator with the existing solutions.**

| Watts | 450 | 500 | 550 | 600 | 650 | 700 | 750 |
|---|---|---|---|---|---|---|---|
| Ozone generator gm/slpm/Watt s/% | 68.3/ 13/ 6.6/ 6.1 | 74.6/ 13/ 6.7/ 6.7 | 80/ 13/ 6.9/ 7.2 | 86.3/ 13/7/ 7.7 | 91.4/ 13/ 7.1 / 8.2 | 80/ 8/ 8.9/ 11.5 | 92/ 10.5/ 8.1 |
| Existing solution | | | | 60/6.8/10/10 | | | |
| Another Existing solution | | | | | | | 88/10.5 /8.5/9 |

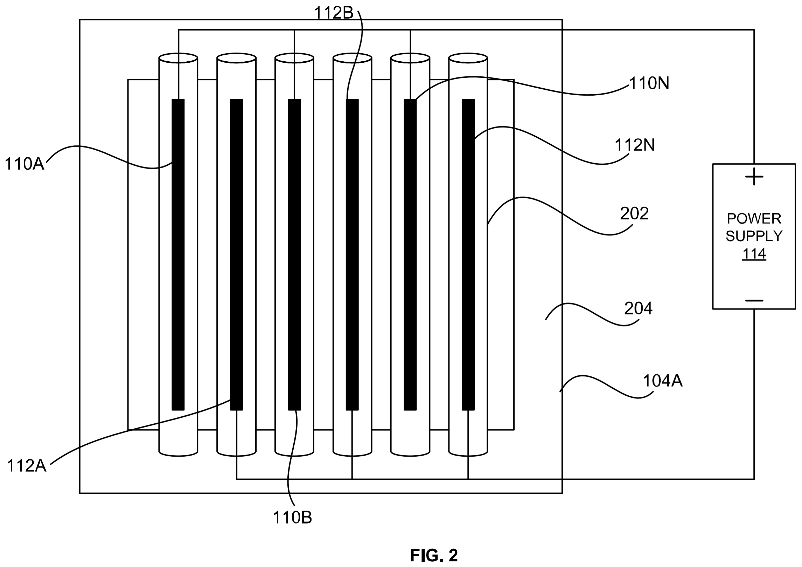

FIG. 2 illustrates a system view of one or more electrodes of the ozone generator 100 of FIG. 1 according to an embodiment herein. The ozone generator 100 includes an ozone production unit 102 with one or more electrodes for ionizing air or oxygen to produce ozone, and an electronic unit 106 for controlling and operating the ozone production unit 102. The electronic unit 106 is placed adjacent to the ozone production unit 102. The ozone generator 100 includes an integrated cooling unit 108 thermally coupled to the ozone production unit 102. The integrated cooling unit 108 is configured to provide targeted cooling to the ozone production unit 108 while minimizing cooling-water consumption. The ozone generator 100 includes an electronic door control switch that is placed on a door of a housing that houses the ozone production unit 102 and the electronic unit 106. When in operation the ozone generator is configured to enable (i) the integrated cooling unit 108 to cool the ozone production unit 102, wherein the cooling of the ozone production unit 102 by the integrated cooling unit 108 indirectly cools to the electronic unit 106 through a thermally conductive interface between the ozone production unit 102 and the electronic unit 106, thereby eliminating a requirement for cooling channels for the electronic unit 106, wherein the ozone production unit 102 and the electronic unit 106 are arranged in a configuration such that any condensation water formed during cooling operation drains downward away from the electronic unit 106, thereby preventing moisture ingress into/contacting from a plurality of electrical components of the electronic unit 106 and reducing overall chiller energy consumption, and (ii) the electronic door control switch to prevent the door of the housing from opening when a dew point temperature difference between a temperature inside the ozone production unit 102 and a temperature outside the ozone production unit 102 exceeds a predefined threshold of 3 degree Celsius, thereby preventing the moisture entering into the plurality of electrodes, (iii) the ozone production unit 102 to generate the ozone with improved concentration.

In some embodiments, the integrated cooling unit 108 is positioned below the ozone production unit 102 to prevent energy loss and water condensation in the ozone production unit 102 and the electronic unit 106. In some embodiments, the one or more electrodes 104A-N comprises one or more first electrodes 110A-N that is connected to positive polarity of the power supply 114, and one or more second electrodes 112A-N that is connected to negative polarity of the power supply 114. The one or more first electrodes 110A-N and the one or more second electrodes 112A-N are arranged alternatively.

In some embodiments, the ozone production unit 102 comprises a dielectric material 202 that encloses (a) the one or more first electrodes 110A-N, and (b) the one or more second electrodes 112A-N. The dielectric material 202 prevents (a) the one or more first electrodes 110A-N, and (b) the one or more second electrodes 112A-N from corrosion when the air or oxygen is passed in between (a) the one or more first electrodes 110A-N, and (b) the plurality of second electrodes to generate ozone. The dielectric material 202 is a glass or ceramic. When a power supply 114 provides a pre-determined power to (a) the one or more first electrodes 110A-N and (b) the one or more second electrodes 112A-N, the one or more first electrodes 110A-N and the one or more second electrodes 112A-N discharges ions to ionize the air or oxygen that is passed in between (a) the one or more first electrodes 110AN and (b) the one or more second electrodes 112A-N to generate the ozone.

In some embodiments, the one or more first electrodes 110A-N and the one or more second electrodes 112A-N are coated with the dielectric material 202. In some embodiments, the dielectric material 202 is a glass or a ceramic. The one or more first electrodes 110A-N and the one or more second electrodes 112A-N are arranged alternatively on a frame 204. The frame 204 provides support to one or more first electrodes 110A-N and the one or more second electrodes 112A-N. In one embodiment, the frame 204 is made up of plastics. When an air or oxygen is passed in-between the one or more first electrodes 110AN and the one or more second electrodes 112A-N, the air or oxygen gets polarized and generates ozone.

The dielectric material 202 prevents the one or more first electrodes 110A-N and the one or more second electrodes 112A-N from corrosion during oxidation. In other words, when the air or oxygen is passed in between the one or more first electrodes 110A-N and the one or more second electrodes 112A-N, the dielectric material 202 that encloses the one or more first electrodes 110A-N and the one or more second electrodes 112A-N prevent the electrodes (e.g., the one or more first electrodes 110A-N and the one or more second electrodes) from corrosion. The one or more first electrodes 110A-N and the one or more second electrodes 112A-N are easily washable and reusable.

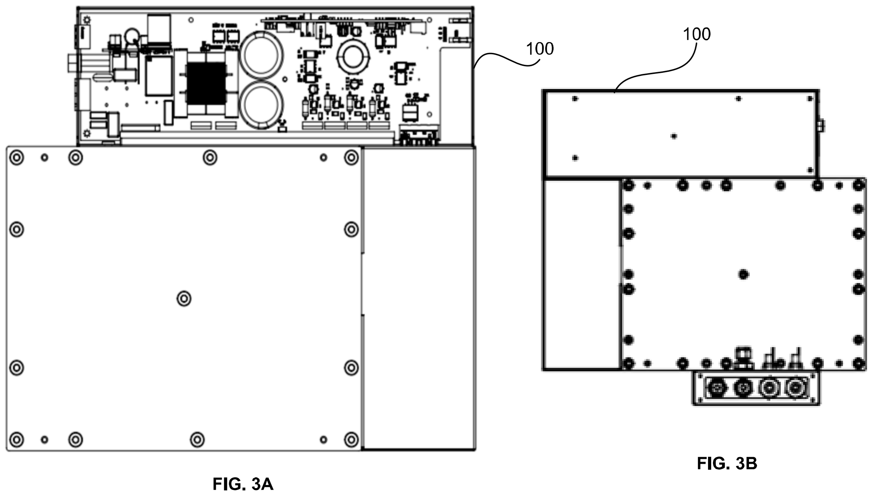

FIGS. 3A & 3B illustrate exploded system views of an ozone generator 100 that generates ozone by preventing water condensation according to an embodiment herein. The ozone generator 100 includes an ozone production unit 102 with one or more electrodes 104A-N for ionizing air or oxygen to produce ozone, and an electronic unit 106 for controlling and operating the ozone production unit 102. The ozone generator 100 includes an integrated cooling unit 108 that is thermally coupled to the ozone production unit 102. The integrated cooling unit 108 is configured to provide targeted cooling to the ozone production unit 108 while minimizing cooling-water consumption. The ozone generator 100 includes an electronic door control switch that is placed on a door of a housing that houses the ozone production unit 102 and the electronic unit 106. When in operation the ozone generator enables is configured to enable (i) the integrated cooling unit 108 to cool the ozone production unit 102, wherein the cooling of the ozone production unit 102 by the integrated cooling unit 108 indirectly cools to the electronic unit 106 through a thermally conductive interface between the ozone production unit 102 and the electronic unit 106, thereby eliminating a requirement for cooling channels for the electronic unit 106, wherein the ozone production unit 102 and the electronic unit 106 are arranged in a configuration such that any condensation water formed during cooling operation drains downward away from the electronic unit 106, thereby preventing moisture ingress into/contacting from a plurality of electrical components of the electronic unit 106 and reducing overall chiller energy consumption, and (ii) the electronic door control switch to prevent the door of the housing from opening when a dew point temperature difference between a temperature inside the ozone production unit 102 and a temperature outside the ozone production unit 102 exceeds a predefined threshold of 3 degree Celsius, thereby preventing the moisture entering into the plurality of electrodes, (iii) the ozone production unit 102 to generate the ozone with improved concentration.

In some embodiments, the ozone generator 100 comprises a moisture prevention system that detects a differential temperature between the temperature inside the ozone production unit 102 and the temperature outside the ozone production unit 102. The ozone generator 100 deactivates the integrated cooling unit 108 and enables the electronic door control switch to allow the door opening of the housing when the dew point temperature difference within 3 degree Celsius. The housing may be an air tight chamber to completely isolate external air entering into the ozone generator 100.

In some embodiments, the ozone generator 100 implements an Intelligent waveform sampling to (i) optimize power consumption by adjusting the waveform to reduce the power supplied to the ozone generator 100 ranging from 100% to 5%, and (ii) control the ozone generation process, thereby enabling the ozone generator 100 to produce varying concentration of ozone ranging from 2% to 100% as required, thereby enabling for precise control and adjustment of ozone production. For example, the ozone generator 100 may consume 6 watts to produce 1 gram of ozone.

In some embodiments, the ozone production unit 102 including the plurality of electrodes (104A-N) and the electronic unit 106 including a plurality of electrical components are arranged in a vertical stack arrangement inside the ozone production unit 102, such that the condensation water to flow downward, thereby preventing the water from contacting the electrical components.

In some embodiments, the ozone generator 100 generates ozone with a concentration of about 25 wt%. The ozone generator 100 may produce ozone up to 150 grams per hour per block. In some embodiments, the ozone generator 100 has an operating ozone concentration of about 12 % and operates up to 850 watts. The ozone generator 100 consumes less than 7 kilowatt per kilogram (Kw/kg) of ozone.

In some embodiments, the ozone generator 100 has a cooling water temperature about 5 to 25 degree Celsius when the ozone generator 100 operates up to 850 watts and has an ozone pressure of up to 2.6 bars and a flow rate of up to 20 standard litres per minute (slpm). In some embodiments, the ozone generator 100 operates at an ozone pressure of up to 3.7 bars and operates up to 1000 watts.

In some embodiments, the one or more electrodes 104A-N comprises one or more first electrodes 110A-N that is connected to positive polarity of the power supply 114, and one or more second electrodes 112A-N that is connected to negative polarity of the power supply 114. The one or more first electrodes 110A-N and the one or more second electrodes 112A-N are arranged alternatively.

In some embodiments, the ozone production unit 102 comprises a dielectric material 202 that encloses (a) the one or more first electrodes 110A-N, and (b) the one or more second electrodes 112A-N. The dielectric material 202 prevents (a) the one or more first electrodes 110A-N, and (b) the one or more second electrodes 112A-N from corrosion when the air or oxygen is passed in between (a) the one or more first electrodes 110A-N, and (b) the plurality of second electrodes to generate ozone. The dielectric material 202 is a glass or ceramic. When a power supply 114 provides a pre-determined power to (a) the one or more first electrodes 110A-N and (b) the one or more second electrodes 112A-N, the one or more first electrodes 110A-N and the one or more second electrodes 112A-N discharges ions to ionize the air or oxygen that is passed in between (a) the one or more first electrodes 110AN and (b) the one or more second electrodes 112A-N to generate the ozone.

In some embodiments, the ozone production unit 102 comprises (i) one or more first inlets 116A-N to supply the air or oxygen into the ozone production unit 102, (ii) one or more second inlets 118A-N to supply water into the integrated cooling unit 108 for cooling the ozone production unit 102 and the electronic unit 106, (iii) one or more first outlets 120A-N to collect the ozone generated from the ozone production unit 102 and (iv) one or more second outlets 122A-N to collect the hot water from the integrated cooling unit 108 after cooling the ozone production unit 102 and the electronic unit 106.

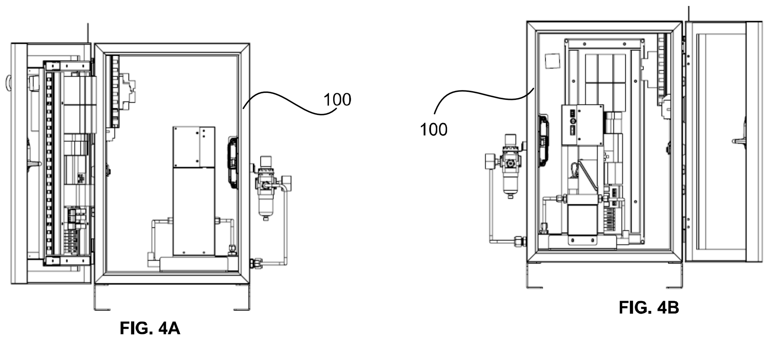

FIGS. 4A & 4B exemplary views of the ozone generator 100 of FIG. 1 according to an embodiment herein. FIG. 4A illustrates a front view of the ozone generator 100 and FIG. 4B illustrates a back view of the ozone generator 100. The parts and functions of the ozone generator 100 are as described above.

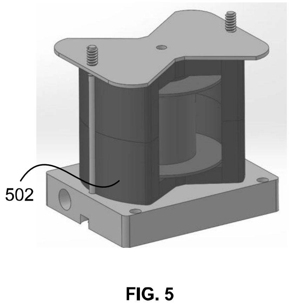

FIG. 5 illustrates an exemplary view of a transformer of the ozone generator of FIG. 1 according to an embodiment herein. The ozone generator 100 includes a transformer 502 that is optimized for efficient operation with enhanced heat regulation, supporting up to 850 Watts, with ongoing efforts to increase capacity to 1500 Watts. The ozone generator 100 can achieve a maximum ozone concentration exceeding 25 wt%, consistently maintaining an operational concentration above 12%. The ozone generator 100 incorporates mechanical enhancements that simplify assembly and repair, while ensuring the ozone generator's resilience under pressures up to 12 bars.

Table 5 provides the efficiency of the ozone generator 100. The ozone generator 100 provides a maximum capacity of 1500 Watts and the transformer 502 generates less heat, making it more suitable for operations with high-temperature water.

**Table 5:**

| **Watts** | **g/m³** | **Gm/hr** | **% Con** | **watts/g** |
|---|---|---|---|---|
| 750 | 151 | 95.13 | 10.56 | 7.89 |
| 800 | 158.5 | 99.86 | 11.08 | 8.08 |
| 850 | 170.1 | 107.16 | 11.90 | 7.94 |
| 900 | 175.6 | 110.63 | 12.28 | 8.18 |
| 950 | 180.2 | 113.53 | 12.60 | 8.40 |
| 1000 | 183.2 | 115.42 | 12.81 | 8.69 |

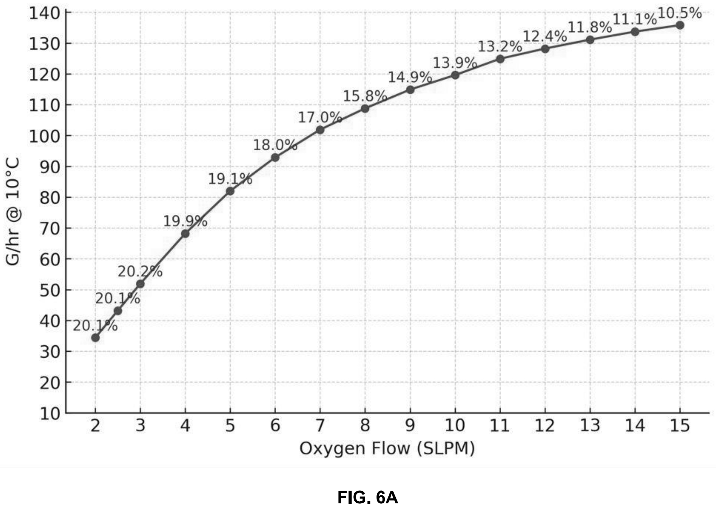

FIG. 6A is a graphical representation that illustrates an ozone production performance curve showing the relationship between oxygen flow rate and ozone output at 10°C of the ozone generator 100 of FIG. 1 according to an embodiment herein. The ozone product is performed at test conditions including 10°C water temperature, 2 bar pressure, and 850 W power. The X-Axis (Oxygen Flow, Standard Liters Per Minute (SLPM)) of the graphical representation represents the oxygen feed rate in standard liters per minute (Slpm), ranging from 2 to 15. The Y-Axis (G/hr @ 10°C) of the graphical representation represents the ozone production rate in grams per hour at 10°C. The curve in the graphical representation, WT% (ozone concentration), represents the concentration of ozone in weight percentage (ozone mass fraction in the oxygen feed). As oxygen flow increases, the ozone production rate (g/hr) increases almost linearly at first and then tapers off after ~12-15 Slpm. At low flows (2-3 Slpm), high concentration (~20 wt%), but lower total production (~35-50 g/hr). At high flows (12-15 Slpm), lower concentration (~10-12 wt%), but higher production (~128-136 g/hr). This shows a trade-off between concentration and production rate, i.e., lower flow yields high concentration; higher flow yields high throughput.

Table 6 illustrates the correlation between oxygen flow rate, ozone production rate, and ozone concentration (wt%) at 10°C.

**Table 6:**

| **Oxygen Flow (Slpm)** | **G/hr @ 10°C** | **WT%** |
|---|---|---|
| 15 | 135.8 | 10.5 |
| 14 | 133.7 | 11.1 |
| 13 | 131.1 | 11.8 |
| 12 | 128.2 | 12.4 |
| 11 | 124.9 | 13.2 |
| 10 | 119.6 | 13.9 |
| 9 | 114.9 | 14.9 |
| 8 | 108.8 | 15.8 |
| 7 | 101.9 | 17.0 |
| 6 | 92.9 | 18.0 |
| 5 | 82.0 | 19.1 |
| 4 | 68.2 | 19.9 |
| 3 | 51.9 | 20.2 |
| 2.5 | 43.2 | 20.1 |
| 2 | 34.4 | 20.1 |

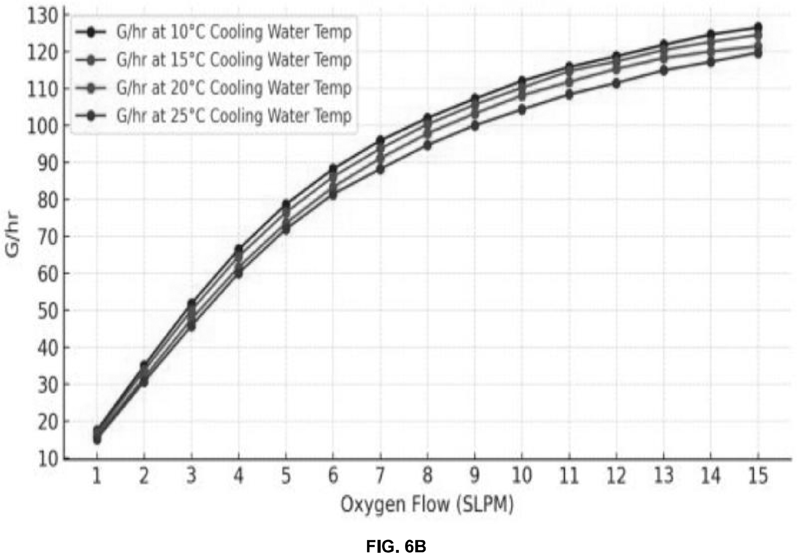

FIG. 6B is a graphical representation that illustrates an ozone production performance curve illustrating the relationship between oxygen flow rate (SLPM) and ozone production rate (G/hr) of the ozone generator 100 of FIG. 1 at varying cooling water temperatures (10°C, 15°C, 20°C, and 25°C) under a constant power input of 850 watts according to an embodiment herein. The X-axis of the graphical representation represents the oxygen flow rate in Standard Liters Per Minute (SLPM) ranging from 1 to 15 SLPM, and the Y-axis of the graphical representation represents the ozone production rate (G/hr) ranging from 10 to 130 g/hr. The zone production performance curve shows that ozone generation increases with increasing oxygen flow, but decreases as the cooling water temperature rises. The highest performance (≈126.5 g/hr at 15 SLPM) is observed at 10°C cooling water temperature, whereas the lowest (≈119.7 g/hr at 15 SLPM) occurs at 25°C.

The graphical representation shows that ozone generation efficiency increases with oxygen flow rate and decreases with higher cooling water temperature, demonstrating the effectiveness of the integrated cooling unit 108 in maintaining optimal ozone output.

Table 7 illustrates measured ozone production (in grams per hour) at different oxygen flow rates (1-15 SLPM) and cooling water temperatures (10°C, 15°C, 20°C, and 25°C) under a power input of 850 watts. The data, as shown in the Table 7, indicate that lower cooling water temperatures result in higher ozone generation efficiency, validating the thermal management performance of the integrated cooling unit 108.

**Table 7:**

| **Oxygen Flow (SLPM)** | **G/hr @ 10°C** | **G/hr @ 15°C** | **G/hr @ 20°C** | **G/hr @ 25°C** |
|---|---|---|---|---|
| 15 | 126.5 | 124.5 | 121.5 | 119.7 |
| 14 | 124.6 | 122.6 | 120.0 | 117.2 |
| 13 | 121.8 | 120.4 | 118.2 | 114.9 |
| 12 | 118.7 | 117.3 | 115.3 | 111.5 |
| 11 | 115.8 | 114.7 | 111.8 | 108.4 |
| 10 | 112.0 | 110.2 | 108.1 | 104.3 |
| 9 | 107.2 | 105.6 | 103.2 | 100.0 |
| 8 | 102.0 | 100.3 | 97.8 | 94.7 |
| 7 | 95.9 | 93.7 | 91.1 | 88.2 |
| 6 | 88.2 | 86.1 | 83.3 | 81.4 |
| 5 | 78.6 | 76.4 | 73.5 | 71.9 |
| 4 | 66.4 | 64.5 | 61.6 | 60.0 |
| 3 | 51.7 | 49.9 | 47.5 | 45.7 |
| 2 | 34.9 | 33.6 | 31.7 | 30.6 |
| 1 | 17.4 | 16.7 | 15.8 | 15.1 |

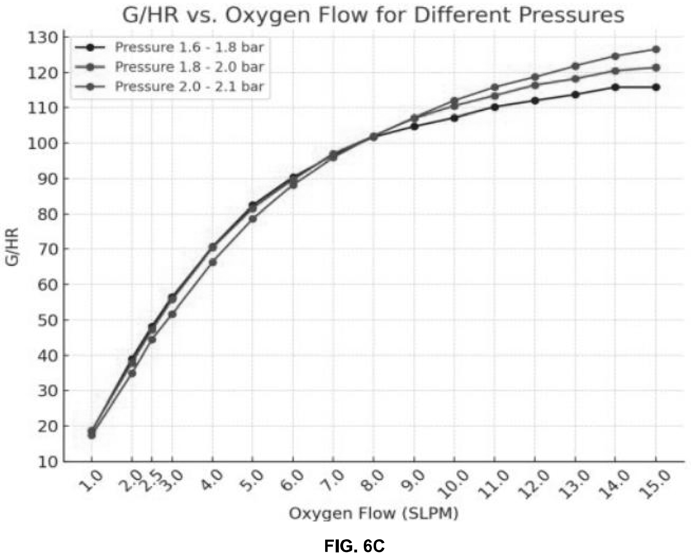

FIG. 6C is a graphical representation that illustrates an ozone production performance curve illustrating the relationship between oxygen flow rate (Standard Liters Per Minute, SLPM) and ozone production rate (G/hr) of the ozone generator 100 of FIG. 1 operating at different gas pressures according to an embodiment herein.

The graphical representation on the FIG. 6C depicts ozone production (G/hr) against oxygen flow rate (SLPM) for three pressure ranges: (i) pressure 1.6-1.8 bar, (ii) pressure 1.8-2.0 bar and (iii) pressure 2.0-2.1 bar. The ozone production performance curve shows that ozone production increases with oxygen flow rate up to approximately 10-12 SLPM, after which the growth rate tapers off, indicating a saturation region. Additionally, higher pressures yield slightly higher ozone production, confirming the efficiency gain under elevated operating pressure conditions. The ozone generation rate increases with flow and pressure, demonstrating improved efficiency of the ozone generator 100 at higher pressures.

Table 8 provides the numerical values of ozone generation rates corresponding to different oxygen flow rates and pressures, which are used to plot the curves.

**Table 8:**

| **Oxygen flow (SLPM)** | **G/hr @ 1.6-1.8 bar** | **G/hr @ 1.8-2.0 bar** | **G/hr @ 2.0-2.1 bar** |
|---|---|---|---|
| 15 | 115.8 | 121.4 | 126.5 |
| 14 | 115.8 | 120.5 | 124.6 |
| 13 | 113.7 | 118.2 | 121.8 |
| 12 | 112.0 | 116.4 | 118.7 |
| 11 | 110.2 | 113.4 | 115.8 |
| 10 | 107.2 | 110.5 | 110.2 |
| 9 | 104.7 | 107.0 | 107.2 |
| 8 | 101.7 | 102.0 | 102.0 |
| 7 | 96.6 | 97.0 | 95.9 |
| 6 | 90.4 | 89.7 | 88.2 |
| 5 | 82.4 | 81.6 | 78.6 |
| 4 | 70.7 | 70.0 | 66.4 |
| 3 | 56.5 | 55.8 | 51.7 |
| 2.5 | 48.2 | 47.2 | 44.5 |
| 2 | 39.0 | 37.9 | 34.9 |
| 1 | 18.5 | 18.7 | 17.4 |

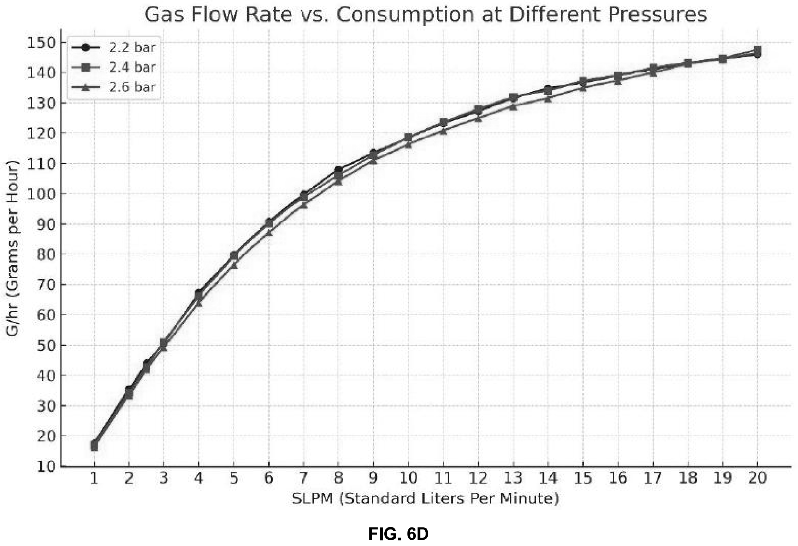

FIG. 6D is a graphical representation that illustrates an ozone production performance curve illustrating the oxygen flow rate (SLPM) and consumption at different gas pressures of 2.2 bar, 2.4 bar, and 2.6 bar of the ozone generator 100 of FIG. 1 according to an embodiment herein. The X-axis of the graphical representation represents oxygen flow rate in Standard Liters per Minute (SLPM) and Y-axis of the graphical representation represents the ozone generation rate in G/hr (grams per hour) at different gas pressures of 2.2 bar, 2.4 bar, and 2.6 bar. The graphical representation shows that the ozone generation increases non-linearly with oxygen flow rate for all pressures. The rate of ozone production rises rapidly up to ~10 SLPM and then tapers off, indicating an upper saturation limit. As pressure increases from 2.2 bar to 2.6 bar, the ozone generation rate increases marginally at lower flow rates but tends to stabilize at higher flow rates (above 15 SLPM). The difference between curves narrows beyond 15 SLPM, implying that higher pressures contribute less significantly to ozone yield at high flow rates.

Table 9 illustrates measured ozone production data corresponding to FIG. 6D. The results validate that higher gas pressure slightly enhances ozone yield up to 2.6 bar, consistent with the operational characteristics of the ozone generator 100.

**Table 9:**

| **SLPM (Oxygen flow)** | **G/hr @ 2.2 bar** | **G/hr @ 2.4 bar** | **G/hr @ 2.6 bar** |
|---|---|---|---|
| 20 | 145.9 | 147.6 | 146.5 |
| 19 | 144.4 | 144.6 | 144.3 |
| 18 | 142.9 | 143.1 | 142.9 |
| 17 | 141.2 | 141.6 | 140.0 |
| 16 | 139.0 | 139.1 | 137.4 |
| 15 | 136.7 | 137.3 | 135.0 |
| 14 | 134.8 | 134.0 | 131.5 |
| 13 | 131.5 | 131.9 | 128.9 |
| 12 | 127.2 | 127.9 | 125.0 |
| 11 | 123.3 | 123.6 | 120.8 |
| 10 | 118.4 | 118.5 | 116.3 |
| 9 | 113.5 | 112.8 | 111.0 |
| 8 | 107.9 | 106.0 | 104.2 |
| 7 | 99.8 | 99.0 | 96.4 |
| 6 | 90.7 | 90.2 | 87.2 |
| 5 | 79.7 | 79.4 | 76.6 |
| 4 | 67.2 | 66.2 | 64.0 |
| 3 | 50.5 | 51.1 | 49.3 |
| 2.5 | 43.9 | 42.7 | 42.0 |
| 2 | 35.3 | 34.2 | 33.4 |
| 1 | 17.5 | 17.0 | 16.4 |

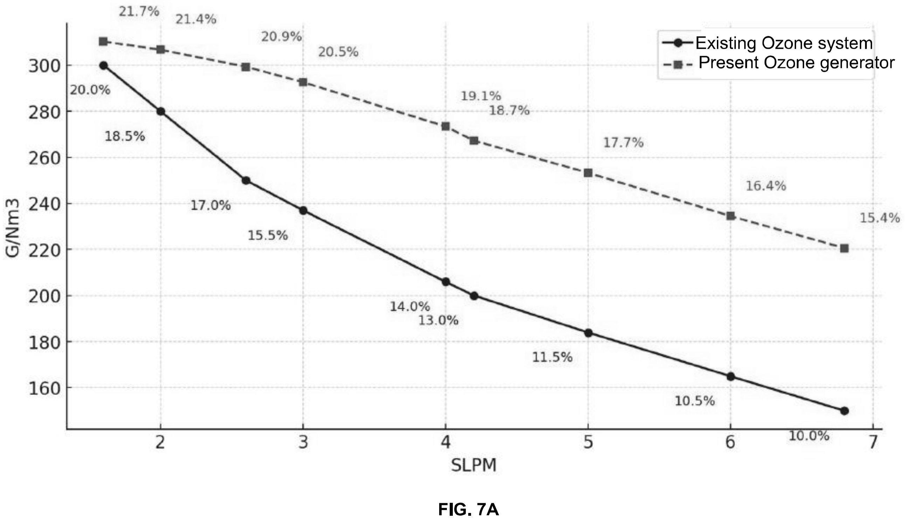

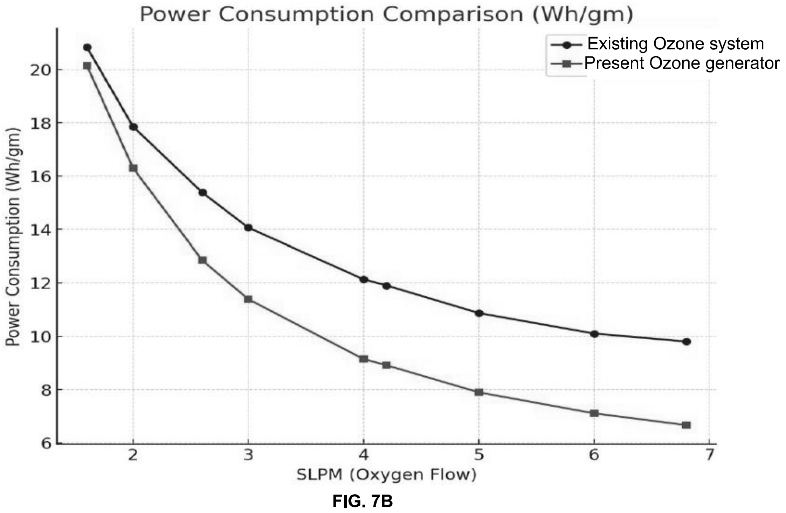

FIGS. 7A & 7B are graphical representations that illustrate a comparison of the ozone production performance of the ozone generator 100 with an existing ozone system according to an embodiment herein. FIG. 7A illustrates the comparison of the ozone production performance of the ozone generator 100 with the existing ozone system in terms of ozone production efficiency and oxygen savings. The ozone generator 100 achieves higher ozone concentration while consuming less oxygen, resulting in substantial oxygen savings. The test conditions of the ozone generator 100 include (i) water temperature: 10°C, (ii) pressure: 2 bar and (iii) power: 600 watts. Both systems are tested under identical conditions. The X-axis of the graphical representation represents oxygen flow rate (SLPM - Standard Liters Per Minute) and Y-axis of the graphical representation represents ozone concentration (G/Nm³ - grams of ozone produced per normal cubic meter of oxygen). Each point on the performance curves shows the ozone concentration (%) for the oxygen flow rate of the corresponding present ozone generator 100 and the existing ozone generator.

At lower oxygen flow rates (1.6-3.0 SLPM), the present ozone generator 100 produces ozone concentrations around 21-20%, while the existing ozone system produces 20-17%. As the flow rate increases, both systems' ozone concentrations drop, but the present ozone generator 100 consistently remains higher. For example: At 4 SLPM, the present ozone generator 100 = 19.1%, Existing = 14.0%. At 6 SLPM: present ozone generator 100 = 16.4%, Existing = 10.5%. This indicates better ozone generation efficiency at all flow rates.

The table 10 shows the percentage of oxygen saved by the present ozone generator 100 compared to the existing ozone system at various oxygen flow rates.

**Table 10:**

| **Oxygen Flow (SLPM)** | **Oxygen Savings (%)** |
|---|---|
| 1.6 | 3.29 |
| 2.0 | 8.71 |
| 2.6 | 16.47 |
| 3.0 | 19.00 |
| 4.0 | 24.65 |
| 4.2 | 25.15 |
| 5.0 | 27.36 |
| 6.0 | 29.64 |
| 6.8 | 32.00 |

From the table 10, oxygen savings increase steadily with flow rate, up to 32% at 6.8 SLPM, showing that the present ozone generator 100 produces more ozone using less oxygen.

Table 11 shows experimental results showing the relationship between oxygen flow rate and ozone concentration for the present ozone generator and the existing ozone system at 10 °C water temperature, 2 bar pressure, and 600 W power. The present ozone generator 100 exhibits higher stability and output efficiency across varying flow rates compared to the existing ozone system.

**Table 11:**

| **SLPM** | **Existing ozone system G/Nm³** | **%Wt** | **Present ozone generator G/Nm³** | **%Wt** |
|---|---|---|---|---|
| 1.6 | 300.0 | 20.0 | 310.2 | 21.7 |
| 2.0 | 280.0 | 18.5 | 306.7 | 21.4 |
| 2.6 | 250.0 | 17.0 | 299.3 | 20.9 |
| 3.0 | 237.0 | 15.5 | 292.6 | 20.5 |
| 4.0 | 206.0 | 14.0 | 273.4 | 19.1 |
| 4.2 | 200.0 | 13.0 | 267.2 | 18.7 |
| 5.0 | 184.0 | 11.5 | 253.3 | 17.7 |
| 6.0 | 165.0 | 10.5 | 234.5 | 16.4 |
| 6.8 | 150.0 | 10.0 | 220.6 | 15.4 |

The present ozone generator 100 produces a higher ozone concentration (G/Nm³) than the existing ozone system for the same oxygen flow rate. It also achieves up to 32% oxygen savings, demonstrating superior oxygen utilization efficiency. The present ozone generator 100 delivers better ozone yield, lower oxygen consumption, and higher operational efficiency, making it more cost-effective and sustainable.

FIG. 7B illustrates the comparison of the ozone production performance of the ozone generator 100 with the existing ozone system in terms of ozone production efficiency and power consumption at 10°C water temperature, 2 bar pressure, and 600 W power input. The x-axis of the graphical representation represents the oxygen flow rate (in Standard Liters Per Minute, SLPM), and the y-axis of the graphical representation represents the power consumption (in Wh/gm of ozone produced). As the oxygen flow rate increases, the power consumption decreases for both systems. However, the present ozone generator 100 consistently consumes less power across all flow rates, indicating higher energy efficiency. At lower flow rates (~1.6-2 SLPM), the difference in power consumption is around 1-2 Wh/gm, but the efficiency gap widens significantly at higher flow rates.

The present ozone generator 100 consistently produces higher ozone output at all flow rates. For example: At 4 SLPM, the existing ozone system produces 49.44 gm/hr, while the present ozone generator 100 produces 65.62 gm/hr. At 6.8 SLPM, the existing ozone system produces 61.20 gm/hr, while the present ozone generator 100 produces 90.00 gm/hr. This shows up to ~45% higher ozone output for the same power input, confirming superior performance and power savings.

Table 12 compares the ozone generation rate (gm/hr) between the existing ozone system and the present ozone generator 100 for various oxygen flow rates under the same test conditions of 10°C water temperature, 2 bar pressure, and 600 W power input.

**Table 12:**

| **Oxygen Flow (SLPM)** | **Existing Ozone system (gm/hr)** | **Present ozone generator (gm/hr)** |
|---|---|---|
| 1.6 | 28.80 | 29.78 |
| 2.0 | 33.60 | 36.80 |
| 2.6 | 39.00 | 46.69 |
| 3.0 | 42.66 | 52.67 |
| 4.0 | 49.44 | 65.62 |
| 4.2 | 50.40 | 67.33 |
| 5.0 | 55.20 | 75.99 |
| 6.0 | 59.40 | 84.42 |
| 6.8 | 61.20 | 90.00 |

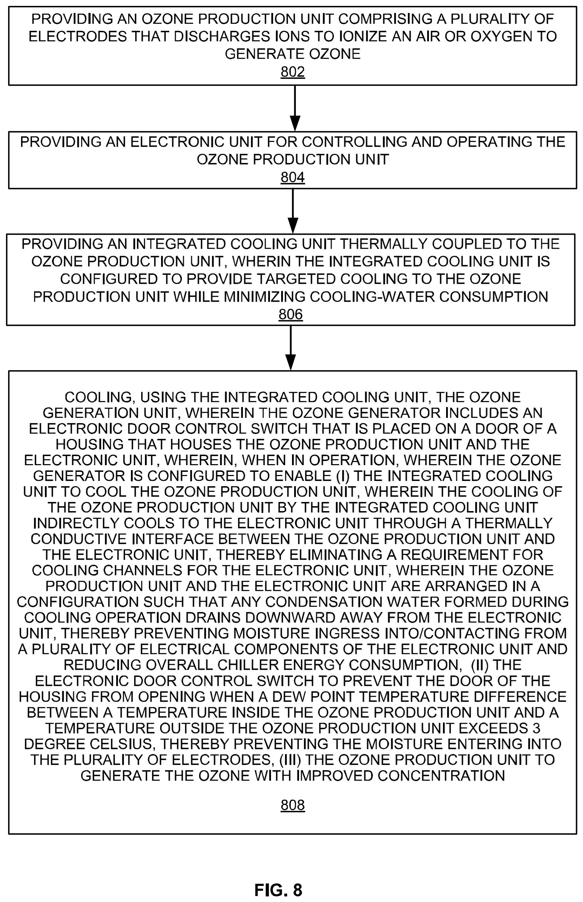

FIG. 8 illustrates a method of generating ozone by preventing water condensation on an ozone generator 100 according to an embodiment herein. At step 802, an ozone production unit 102 is provided. The ozone production unit 102 includes one or more electrodes 104A-N that discharges ions to ionize an air or oxygen to generate ozone. At step 804, an electronic unit 106 is provided for controlling and operating the ozone production unit 102. At step 806, an integrated cooling unit 108 thermally coupled to the ozone production unit 102 is provided. The integrated cooling unit 108 is configured to provide targeted cooling to the ozone production unit 108 while minimizing cooling-water consumption. The ozone generator 100 includes an electronic door control switch that is placed on a door of a housing that houses the ozone production unit 102 and the electronic unit 106. At step 808, when in operation, the ozone generator is configured to enable (i) the integrated cooling unit 108 to cool the ozone production unit 102, wherein the cooling of the ozone production unit 102 by the integrated cooling unit 108 indirectly cools to the electronic unit 106 through a thermally conductive interface between the ozone production unit 102 and the electronic unit 106, thereby eliminating a requirement for cooling channels for the electronic unit 106. The ozone production unit 102 and the electronic unit 106 are arranged in a configuration such that any condensation water formed during cooling operation drains downward away from the electronic unit 106, thereby preventing moisture ingress into/contacting from a plurality of electrical components of the electronic unit 106 and reducing overall chiller energy consumption, (ii) the electronic door control switch to prevent the door of the housing from opening when a dew point temperature difference between a temperature inside the ozone production unit 102 and a temperature outside the ozone production unit 102 exceeds a predefined threshold of 3 degree Celsius, thereby preventing the moisture entering into the plurality of electrodes, (iii) the ozone production unit 102 to generate the ozone with improved concentration.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope.

## Claims

1. An ozone generator (100), comprising:
an ozone production unit (102), wherein the ozone production unit (102) comprises a plurality of electrodes (104A-N) that discharges ions to ionize an air or oxygen to generate ozone;
an electronic unit (106) for controlling the ozone production unit (102), wherein the electronic unit (106) is arranged adjacent to the ozone production unit (102);
**characterized in that**, an integrated cooling unit (108) thermally coupled to the ozone production unit (102), wherein the integrated cooling unit (108) is configured to provide targeted cooling to the ozone production unit (108) while minimizing cooling-water consumption;
an electronic door control switch that is placed on a door of a housing that houses the ozone production unit (102) and the electronic unit (106), wherein the electronic door control switch is configured to prevent opening of the door of the housing when a dew point temperature difference between inside and outside of the ozone production unit (102) exceeds a predefined threshold,
wherein, during operation, the ozone generator is configured to enable
(i) the integrated cooling unit (108) to cool the ozone production unit (102),
wherein the cooling of the ozone production unit (102) by the integrated cooling unit (108) indirectly cools to the electronic unit (106) through a thermally conductive interface between the ozone production unit (102) and the electronic unit (106), thereby eliminating a requirement for cooling channels for the electronic unit (106),
wherein the ozone production unit (102) and the electronic unit (106) are arranged in a configuration such that any condensation water formed during cooling operation drains downward away from the electronic unit (106), thereby preventing moisture ingress into/contacting from a plurality of electrical components of the electronic unit (106) and reducing overall chiller energy consumption; and
(ii) the electronic door control switch to prevent the door of the housing from opening when the dew point temperature difference between the temperature inside the ozone production unit (102) and the temperature outside the ozone production unit (102) exceeds a predefined threshold of 3 degree Celsius, thereby preventing the moisture entering into the plurality of electrodes, which enables the ozone production unit (102) to generate the ozone at a controlled and improved concentration.

2. The ozone generator (100) as claimed in claim 1, wherein the ozone generator (100) comprises an automatic moisture prevention system configured to detect the dew point temperature difference between the temperature inside the ozone production unit (102) and the temperature outside the ozone production unit (102) to at least one of (i) deactivate the integrated cooling unit (108) or (ii) enable the electronic door control switch to allow the opening of the door of the housing, when the dew point temperature difference is within a predefined threshold of 3 degree Celsius, thereby preventing moisture/water ingress into the plurality of electrical components of the electronic unit (106).

3. The ozone generator (100) as claimed in claim 1, wherein the ozone generator (100) operates using an Intelligent waveform sampling system to (i) optimize power consumption by adjusting the waveform to reduce the power supplied to the ozone generator (100) between 100% to 5%, thereby enabling the ozone generator (100) to produce varying concentration of ozone ranging from 2% to 100% as required, thereby enabling for precise control and adjustment of ozone production.

4. The ozone generator (100) as claimed in claim 1, wherein the ozone production unit (102) and the electronic unit (106) are arranged in a vertical stack arrangement, which enables the condensation water to flow downward, thereby preventing the water from contacting electrical components.

5. The ozone generator (100) as claimed in claim 1, wherein the ozone generator (100) is configured to generate the ozone with a concentration of about 25 wt%, wherein the ozone generator (100) may produce ozone up to 150 grams per hour per block.

6. The ozone generator (100) as claimed in claim 1, wherein the ozone generator (100) has an operating ozone concentration of about 12% and operates up to 850 watts, wherein the ozone generator (100) consumes less than 7 kilowatt per kilogram (Kw/kg) of ozone.

7. The ozone generator (100) as claimed in claim 1, wherein the ozone generator (100) has a cooling water temperature about 5 to 25 degrees Celsius when the ozone generator (100) operates up to 850 watts and has an ozone pressure of up to 2.6 bars and a flow rate of up to 20 standard litres per minute (slpm).

8. The ozone generator (100) as claimed in claim 1, wherein the ozone generator (100) operates at an ozone pressure of up to 3.7 bars and operates up to 1000 watts.

9. The ozone generator (100) as claimed in claim 1, wherein the plurality of electrodes (104AN) comprises
a plurality of first electrodes (110A-N) that is connected to positive polarity of the power supply (114); and
a plurality of second electrodes (112A-N) that is connected to negative polarity of the power supply (114), wherein the plurality of first electrodes (110A-N) and the plurality of second electrodes (112A-N) are arranged alternatively.

10. The ozone generator (100) as claimed in claim 1, wherein the ozone production unit (102) comprises a dielectric material (202) that encloses (a) the plurality of first electrodes (110AN), and (b) the plurality of second electrodes (112A-N), wherein the dielectric material (202) prevents (a) the plurality of first electrodes (110A-N), and (b) the plurality of second electrodes (112A-N) from corrosion when the air or oxygen is passed in between (a) the plurality of first electrodes (110A-N), and (b) the plurality of second electrodes (112A-N) to generate ozone, wherein the dielectric material (202) is a glass or ceramic, wherein when a power (114) supply provides a pre-determined power to (a) the plurality of first electrodes (110A-N) and (b) the plurality of second electrodes (112A-N), the plurality of first electrodes (110A-N) and the plurality of second electrodes (112A-N) discharges ions to ionize the air or oxygen that is passed in between (a) the plurality of first electrodes (110A-N) and (b) the plurality of second electrodes (112A-N) to generate the ozone.

11. The ozone generator (100) as claimed in claim 1, wherein the ozone production unit (102) comprises a manifold comprising (i) a plurality of first inlets (116A-N) to supply the air or oxygen into the ozone production unit (102), (ii) a plurality of second inlets (118A-N) to supply water into the integrated cooling unit (108) for cooling the ozone production unit (102) and the electronic unit (106), (iii) a plurality of first outlets (120A-N) to collect the ozone generated from the ozone production unit (102) and (iv) a plurality of second outlets (122A-N) to collect the hot water from the integrated cooling unit (108) after cooling the ozone production unit (102) and the electronic unit (106).

12. The ozone generator (100) as claimed in claim 1, wherein the ozone generator (100) that operates at 600 watts generates about 100 grams of ozone per hour and consumes 6 watts per gram of ozone.

13. The ozone generator (100) as claimed in claim 1, wherein the ozone generator (100) operates at a pressure ranging from 0.5 to 4 bar and a frequency that ranges from 40.3 to 50 Kilo Hertz (Khz).

14. The ozone generator (100) as claimed in claim 1, wherein the ozone generator (100) that operates at 425 watts generates about 67.8 grams of ozone for 9 standard litres per minute (slpm) and consumes 6.3 watts per gram of ozone, wherein the ozone generator (100) that operates at 510 watts generates about 81.1 grams of ozone for 9 standard litres per minute (slpm) and consumes 6.3 watts per gram of ozone, wherein the ozone generator (100) that operates at 595 watts generates about 91.3 grams of ozone for 9 standard litres per minute (slpm) and consumes 6.5 watts per gram of ozone, wherein the ozone generator (100) that operates at 680 watts generates about 101.5 grams of ozone for 9 standard litres per minute (slpm) and consumes 6.7 watts per gram of ozone, wherein the ozone generator (100) that operates at 765 watts generates about 109 grams of ozone for 9 standard litres per minute (slpm) and consumes 7 watts per gram of ozone, wherein the ozone generator (100) that operates at 850 watts generates about 116.5 grams of ozone for 9 standard litres per minute (slpm) and consumes 7.3 watts per gram of ozone.

15. The ozone generator (100) as claimed in claim 1, wherein the housing is an air tight chamber to completely isolate external air entering into the ozone generator (100).
